# EUROPÄISCHE PATENTSCHRIFT

(11) **EP 4 087 996 B1**
(45) Veröffentlichungstag und Bekanntmachung des Hinweises auf die Patenterteilung: **25.10.2023**
(21) Anmeldenummer: 21700358.1
(22) Anmeldetag: 05.01.2021
(51) Int. Cl.: E06B 3/663, B32B 27/32, B32B 27/36, B32B 15/09, B32B 15/085, B32B 15/20, B32B 9/00

(54) **ABSTANDHALTER MIT VERBESSERTER HAFTUNG**
SPACER WITH IMPROVED ADHESION
ENTRETOISES À ADHÉRENCE AMÉLIORÉE

(30) Priorität: 06.01.2020 EP 20150313
(43) Veröffentlichungstag der Anmeldung: 16.11.2022
(73) Patentinhaber: Saint-Gobain Glass France, 92400 Courbevoie (FR)
(72) Erfinder: JANSSEN, David, 47918 Tönisvorst (DE); SCHREIBER, Walter, 52074 Aachen (DE); CARRE, Florian, 52351 Übach-Palenberg (DE)
(74) Vertreter: Gebauer, Dieter Edmund
(86) Internationale Anmeldenummer: PCT/EP2021/050048
(87) Internationale Veröffentlichungsnummer: WO 2021/140081

(56) Entgegenhaltungen:
- WO-A1-2015/043626
- WO-A1-2016/046081
- US-A1- 2018 073 292

## Beschreibung

Die Erfindung betrifft einen Abstandhalter für Isolierglaseinheiten, eine Isolierglaseinheit und deren Verwendung.

Isolierverglasungen enthalten in der Regel mindestens zwei Scheiben aus Glas oder polymeren Materialien. Die Scheiben sind über einen vom Abstandhalter (Spacer) definierten Gas- oder Vakuumraum voneinander getrennt. Das Wärmedämmvermögen von Isolierglas ist deutlich höher als das von Einfachglas und kann in Dreifachverglasungen oder mit speziellen Beschichtungen noch weiter gesteigert und verbessert werden. So ermöglichen beispielsweise silberhaltige Beschichtungen eine verringerte Transmission von infraroter Strahlung und senken so die Abkühlung eines Gebäudes im Winter.

Neben der Beschaffenheit und dem Aufbau des Glases sind auch die weiteren Komponenten einer Isolierverglasung von großer Bedeutung. Die Dichtung und vor allem der Abstandhalter haben einen großen Einfluss auf die Qualität der Isolierverglasung. In einer Isolierverglasung wird ein umlaufender Abstandhalter zwischen zwei Glasscheiben befestigt, sodass ein gasgefüllter oder luftgefüllter innerer Scheibenzwischenraum entsteht, der gegen das Eindringen von Feuchtigkeit abgedichtet ist.

Die wärmeisolierenden Eigenschaften von Isolierverglasungen werden ganz wesentlich vom Wärmeleitvermögen im Bereich des Randverbunds, insbesondere des Abstandhalters beeinflusst. Bei metallischen Abstandhaltern kommt es durch die hohe thermische Leitfähigkeit des Metalls zur Ausbildung einer Wärmebrücke am Rand des Glases. Diese Wärmebrücke führt einerseits zu Wärmeverlusten im Randbereich der Isolierverglasung und andererseits bei hoher Luftfeuchtigkeit und niedrigen Außentemperaturen zur Bildung von Kondensat auf der Innenscheibe im Bereich des Abstandshalters. Um diese Probleme zu lösen, werden vermehrt thermisch optimierte, sogenannte "Warme-Kante"-Systeme eingesetzt, bei denen die Abstandhalter aus Materialien mit geringerer Wärmeleitfähigkeit, insbesondere Kunststoffen bestehen.

Die Verbindung zwischen Scheibe und Abstandshalter wird über eine Klebeverbindung aus einem sogenannten primären Dichtmittel, beispielsweise Polyisobutylen, erzeugt. Bei einem Versagen dieser Klebeverbindung ist dies eine Eintrittsstelle für Feuchtigkeit. Auf der nach außen weisenden Seite des Abstandshalters im äußeren Scheibenzwischenraum ist als Randversiegelung in der Regel ein sekundäres Dichtmittel angebracht, das mechanische Belastung durch Klimalasten aufnimmt und so die Stabilität der Isolierverglasung sicherstellt. Die Außenseite des Abstandshalters muss so beschaffen sein, dass eine gute Haftung zum sekundären Dichtmittel gewährleistet ist. Aufgrund der Temperaturänderungen im Laufe der Zeit, beispielsweise durch Sonneneinstrahlung, dehnen sich die einzelnen Komponenten der Isolierverglasung aus und ziehen sich bei einer Erkaltung wieder zusammen. Das Glas dehnt sich dabei stärker aus als der Abstandhalter aus einem polymeren Material. Diese mechanische Bewegung dehnt oder staucht daher die Klebeverbindung und die Randversiegelung, welche diese Bewegungen nur in einem begrenzten Maße durch eigene Elastizität ausgleichen können. Im Laufe der Betriebsdauer der Isolierverglasung kann der beschriebene mechanische Stress eine teil- oder ganzflächige Ablösung einer Klebeverbindung bedeuten. Diese Ablösung der Verbindung zwischen Dichtmittel und Abstandhalter kann ein Eindringen von Luftfeuchtigkeit in die Isolierverglasung ermöglichen, was einen Beschlag im Bereich der Scheiben und ein Nachlassen der Isolierwirkung nach sich zieht. Die Seiten des Abstandhalters, die in Kontakt mit einem Dichtmittel stehen, sollten daher eine möglichst gute Haftung zum Dichtmittel aufweisen. Ein Ansatz zur Verbesserung der Haftung zum Dichtmittel ist die Anpassung der Eigenschaften einer auf der Außenseite des Abstandhalters angeordneten Dampfsperrfolie.

Das Dokument EP2719533 A1 offenbart hierzu einen Abstandhalter mit einer Folie, die an der zum sekundären Dichtmittel weisenden Seite eine dünne Haftschicht aus SiOx oder AlOy aufweist. Die Folie enthält außer der dünnen Haftschicht nur polymere Schichten, die auch die feuchtigkeitsabdichtende Funktion übernehmen. Als Sperrschicht gegen Feuchtigkeit dienen unter anderem orientierte EVOH-Schichten.

Das Dokument WO2019134825 A1 offenbart eine Folie für einen Abstandhalter, die eine äußere Haftschicht in Form eines organischen Primers aufweist.

Das Dokument WO2015043626 A1 offenbart eine Folie für einen Abstandhalter mit einer äußeren SiOx-Schicht als Haftgrund für Kleb- und Dichtstoffe. Weiterhin ist eine innere, mit dem Grundkörper verschweißbare Schicht aus orientiertem Polypropylen offenbart.

Das Dokument WO 2016/046081 A1 offenbart einen Abstandhalter für Isolierglaseinheiten, mindestens umfassend- ein polymeres Hohlprofil, umfassendeine erste Seitenwand und eine parallel dazu angeordnete zweite Seitenwand, eine Verglasungsinnenraumwand, die die Seitenwände miteinander verbindet;-eine Außenwand, die im Wesentlichen parallel zur Verglasungsinnenraumwand angeordnet ist und die Seitenwände miteinander verbindet;- einen Hohlraum, der von den Seitenwänden, der Verglasungsinnenraumwand und der Außenwand umschlossen wird,- eine Feuchtigkeitsbarriere auf der ersten Seitenwand, der Außenwand und auf der zweiten Seitenwand des polymeren Hohlkörpers.

Neben der im Stand der Technik beschriebenen optimierten Haftung zum sekundären Dichtmittel sind auch die Haftung der aufgebrachten Folie am Abstandhalter sowie die innere Stabilität der Folie von großer Bedeutung. Für eine hohe Langzeitstabilität eines Abstandhalters in einer Isolierverglasung muss sowohl die Haftung zum sekundären Dichtmittel und primären Dichtmittel hoch sein als auch die Folie selbst langzeitstabil sein.

Es ist daher die Aufgabe der vorliegenden Erfindung, einen verbesserten Abstandhalter bereitzustellen, der die oben genannten Nachteile nicht aufweist, sowie eine verbesserte Isolierglaseinheit bereitzustellen.

Die Aufgabe der vorliegenden Erfindung wird erfindungsgemäß durch einen Abstandhalter für Isolierglaseinheiten nach dem unabhängigen Anspruch 1 gelöst. Bevorzugte Ausführungen der Erfindung gehen aus den Unteransprüchen hervor. Eine erfindungsgemäße Isolierglaseinheit und deren erfindungsgemäße Verwendung gehen aus weiteren unabhängigen Ansprüchen hervor.

Der erfindungsgemäße Abstandhalter für Isolierglaseinheiten umfasst mindestens ein polymeres Hohlprofil mit einer ersten Seitenwand, einer parallel dazu angeordneten zweiten Seitenwand, einer Verglasungsinnenraumwand, einer Außenwand und einem Hohlraum. Der Hohlraum wird von den Seitenwänden, der Verglasungsinnenraumwand und der Außenwand umschlossen. Die Verglasungsinnenraumwand ist dabei im Wesentlichen senkrecht zu den Seitenwänden angeordnet und verbindet die erste Seitenwand mit der zweiten Seitenwand. Die Seitenwände sind die Wände des Hohlprofils, an denen die äußeren Scheiben der Isolierglaseinheit angebracht werden. Die Verglasungsinnenraumwand ist die Wand des Hohlprofils, die nach Einbau in die fertige Isolierglaseinheit zum inneren Scheibenzwischenraum weist. Die Außenwand ist im Wesentlichen parallel zur Verglasungsinnenraumwand angeordnet und verbindet die erste Seitenwand mit der zweiten Seitenwand. Die Außenwand weist nach Einbau in die fertige Isolierglaseinheit zum äußeren Scheibenzwischenraum.

Der Abstandhalter umfasst weiterhin eine Feuchtigkeitsbarriere auf der Außenwand, der ersten Seitenwand und der zweiten Seitenwand des polymeren Hohlprofils. Die Feuchtigkeitsbarriere dichtet den inneren Scheibenzwischenraum gegen das Eindringen von Feuchtigkeit ab und verhindert den Verlust eines im inneren Scheibenzwischenraum enthaltenen Gases. Die Feuchtigkeitsbarriere hat die Form einer Folie mit mehreren Schichten und umfasst ein Mehrschichtensystem mit Barrierefunktion. Dieses Mehrschichtensystem umfasst mindestens eine polymere Schicht und eine anorganische Barriereschicht. Das Mehrschichtensystem übernimmt die Barrierefunktion der Feuchtigkeitsbarriere und verhindert das Eindringen von Feuchtigkeit in den inneren Scheibenzwischenraum. Zusätzlich umfasst die Feuchtigkeitsbarriere eine metallische oder eine keramische außenliegende Haftschicht, deren Dicke geringer als 100 nm ist. Die außenliegende Haftschicht weist in Richtung des außenliegenden Scheibenzwischenraums und steht in der fertigen Isolierglaseinheit in Kontakt mit dem sekundären Dichtmittel. Die Haftschicht dient insbesondere der Verbesserung der Haftung zum sekundären Dichtmittel. Zwischen der Haftschicht und dem Mehrschichtensystem ist erfindungsgemäß eine Anbindungsschicht angeordnet, die im Wesentlichen aus einem Polymer ausgewählt aus der Gruppe umfassend orientiertes Polypropylen (oPP), orientiertes Polyethylenterephthalat (oPET), biaxial orientiertes Polypropylen (boPP) und biaxial orientiertes Polyethylenterephthalat (boPET) besteht. Die Anbindungsschicht grenzt dabei direkt an die Haftschicht an, das heißt zwischen der Anbindungsschicht und der Haftschicht befindet sich keine weitere polymere Schicht oder eine Klebeschicht, sondern die beiden Schichten stehen in direktem Kontakt. Die Anbindungsschicht verbessert die Anbindung der Haftschicht an das Mehrschichtensystem, sodass nicht nur die Haftung zum sekundären Dichtmittel verbessert wird, sondern gleichzeitig auch die interne Stabilität der gesamten Feuchtigkeitsbarriere verbessert wird. Zudem verbessert die Anbindungsschicht die mechanische Stabilität der Feuchtigkeitsbarriere insbesondere während Dehnung der Folie. Somit wird die Langzeitstabilität des Abstandhalters gegenüber dem Stand der Technik weiter verbessert.

In einer bevorzugten Ausführungsform ist die Haftschicht eine keramische Haftschicht und umfasst SiOx oder besteht aus SiOx. SiOx weist eine besonders gute Haftung auf zu den Materialien des sekundären Dichtmittels und hat eine geringe Wärmeleitung, was die wärmeisolierenden Eigenschaften des Abstandhalters weiter verbessert. Bevorzugt eingesetzt wird SiOx mit x zwischen 0,7 und 2,1, bevorzugt zwischen 1 und 1,5.

In einer weiteren bevorzugten Ausführungsform ist die Haftschicht eine metallische Haftschicht. Eine metallische Haftschicht kann erfindungsgemäß sowohl reine Metalle als auch deren Oxide sowie deren Legierungen umfassen. Bevorzugt umfasst die metallische Haftschicht Aluminium, Titan, Nickel, Chrom, Eisen oder Legierungen oder Oxide davon oder besteht daraus. Diese weisen eine gute Haftung zum angrenzenden Dichtmittel auf. Bevorzugte Legierungen sind Edelstahl und TiNiCr.

Besonders bevorzugt umfasst die metallische Haftschicht ein Oxid von Aluminium, Titan, Nickel, Chrom, Eisen oder besteht daraus. Die Metalloxide zeichnen sich durch eine besonders gute Haftung zum angrenzenden Dichtmittel aus und sind besonders langzeitstabil. Überraschend gute Ergebnisse in Bezug auf die Langzeitstabilität wurden mit einer metallischen Haftschicht aus Chromoxid oder Titanoxid erzielt.

In einer bevorzugten Ausführungsform ist die metallische oder keramische Haftschicht mittels chemischer Gasphasenabscheidung (CVD) oder physikalischer Gasphasenabscheidung (PVD) direkt auf die Anbindungsschicht aufgebracht. Somit wird eine besonders gute Haftung zwischen Anbindungsschicht und Haftschicht erzielt.

In einer bevorzugten Ausführungsform hat die metallische oder keramische Haftschicht eine Dicke zwischen 5 nm und 70 nm, bevorzugt zwischen 10 nm und 50 nm. In diesem Bereich trägt die Haftschicht nur wenig zur Wärmeleitung durch den Abstandhalter bei und ist ausreichend dick, um eine gute Haftung zum sekundären Dichtmittel zu gewährleisten. Besonders bevorzugt hat die Haftschicht eine Dicke zwischen 20 nm und 30 nm. In diesem Bereich ist eine gute Haftung gewährleistet und gleichzeitig sind die Materialkosten für die Haftschicht vorteilhaft gering.

In einer bevorzugten Ausführungsform besteht die Anbindungsschicht aus einem Polymer ausgewählt aus der Gruppe aus orientiertem Polypropylen (oPP), orientiertem Polyethylenterephthalat (oPET), biaxial orientiertem Polypropylen (boPP) und biaxial orientiertem Polyethylentherephthalat (boPET). Diese Polymere stellen eine besonders gute Haftung an der angrenzenden Haftschicht und dem angrenzenden Mehrschichtensystem sicher. Orientiertes Polypropylen und orientiertes Polyethylenterephthalat sind in eine Richtung gereckte Folien. Folien aus boPP und boPET sind in Längsrichtung und in Querrichtung verstreckt. Durch das Verstrecken werden die Folien widerstandsfähiger als die ursprünglichen Folien. Diese Folien sind besonders stabil und haben eine erhöhte Undurchlässigkeit gegen Wasserdampf. Besonders bevorzugt besteht die Anbindungsschicht aus boPP oder boPET, da diese die besten Ergebnisse bezüglich Langzeitstabilität liefern und gleichzeitig die Wasserdampfdurchlässigkeit der Feuchtigkeitsbarriere vorteilhaft herabsetzen.

In einer bevorzugten Ausführungsform hat die Anbindungsschicht eine Dicke von 8 µm bis 30 µm, besonders bevorzugt eine Dicke von 12 µm bis 25 µm. In diesen Dickenbereichen ist Stabilität während einer Dehnung der Folie besonders hoch, sodass die Langzeitstabilität des Abstandhalters erhöht ist.

In einer bevorzugten Ausführungsform umfasst das Mehrschichtensystem mit Barrierefunktion mindestens zwei polymere Schichten und mindestens zwei anorganische Barriereschichten. Die anorganischen Barriereschichten tragen wesentlich zur Barrierefunktion des Mehrschichtensystems bei. Die polymeren Schichten dienen zum einen als Trägermaterial und als Zwischenschichten zwischen den anorganischen Barriereschichten. Zum anderen können auch die polymeren Schichten einen wesentlichen Beitrag zur Barrierefunktion leisten. Insbesondere orientierte polymere Folien verbessern die Dichtigkeit des Abstandhalters.

In einer bevorzugten Ausführungsform umfasst das Mehrschichtensystem mit Barrierefunktion genau zwei polymere Schichten und drei anorganische Barriereschichten. Durch eine dritte anorganische Barriereschicht wird die Barrierewirkung der Feuchtigkeitsbarriere weiter verbessert.

In einer bevorzugten Ausführungsform umfasst das Mehrschichtensystem mindestens drei polymere Schichten und mindestens drei anorganische Barriereschichten. In einer weiteren bevorzugten Ausführungsform umfasst das Mehrschichtensystem mit Barrierefunktion genau drei polymere Schichten und genau drei anorganische Barriereschichten. Eine derartige Feuchtigkeitsbarriere lässt sich gut aus drei einfach beschichteten Folien fertigen.

In einer bevorzugten Ausführungsform sind einzelne Schichten des Mehrschichtensystems zu einem Schichtstapel angeordnet mit der Schichtenfolge anorganische Barriereschicht / polymere Schicht / anorganische Barriereschicht. Je nach Herstellungsverfahren können die Schichten direkt verbunden sein oder durch eine dazwischen angeordnete Verklebungsschicht verbunden sein. Durch die Anordnung einer polymeren Schicht zwischen zwei anorganischen Barriereschichten wird die interne Stabilität der Feuchtigkeitsbarriere verbessert, da ein Ablösen einzelner Schichten weniger häufig auftritt als bei einer Anordnung, bei der alle anorganischen Barriereschichten aneinander angrenzend angeordnet sind.

In einer bevorzugten Ausführungsform ist eine anorganische Barriereschicht des Mehrschichtensystems direkt angrenzend an die Anbindungsschicht angeordnet. Das heißt diese anorganische Barriereschicht ist ohne dazwischenliegende polymere Schicht oder Verklebungsschicht auf der Anbindungsschicht angeordnet. Dies ist vorteilhaft für die Stabilität des Gesamtsystems und besonders einfach herstellbar.

In einer bevorzugten Ausführungsform ist die Schichtenabfolge in der Feuchtigkeitsbarriere wie folgt: äußere Haftschicht / Anbindungsschicht / anorganische Barriereschicht / Verklebungsschicht / polymere Schicht / anorganische Barriereschicht. Dieser Folienaufbau ist besonders stabil und zeichnet sich durch eine gute Feuchtigkeitsabdichtung aus. Die Herstellung erfolgt bevorzugt durch Kaschieren einer Folie umfassend äußere Haftschicht, Anbindungsschicht und anorganische Barriereschicht mit einer Folie umfassend polymere Schicht und anorganische Barriereschicht.

Besonders bevorzugt ist die Schichtenabfolge in der Feuchtigkeitsbarriere wie folgt: äußere Haftschicht / Anbindungsschicht / anorganische Barriereschicht / Verklebungsschicht / polymere Schicht / anorganische Barriereschicht / Verklebungsschicht / anorganische Barriereschicht / polymere Schicht. Durch Kaschieren einer weiteren Folie aus polymerer Schicht und anorganischer Barriereschicht wird die Dichtigkeit der Folie weiter verbessert. Durch die Anordnung der anorganischen Barriereschicht nach innen, das heißt nicht zum Abstandhalter weisend, wird die anorganische Barriereschicht durch die nach außen zum Abstandhalter weisende polymere Schicht geschützt.

Alternativ bevorzugt wird die weitere Folie aus polymerer Schicht und anorganischer Barriereschicht so kaschiert, dass sich die folgende Schichtenabfolge in der Feuchtigkeitsbarriere ergibt: äußere Haftschicht / Anbindungsschicht / anorganische Barriereschicht / Verklebungsschicht / polymere Schicht / anorganische Barriereschicht / Verklebungsschicht / polymere Schicht/ anorganische Barriereschicht. In diesem Fall ist eine anorganische Barriereschicht zur Außenwand des Abstandhalters gerichtet und wird mit dieser verklebt.

Jede der oben genannten bevorzugten Ausführungsformen kann mit weiteren Schichten auf der zum Abstandhalter weisenden Seite kombiniert werden. So kann die Dichtigkeit weiter verbessert werden, wobei jedoch die Materialkosten steigen.

Eine polymere Schicht des Mehrschichtensystems umfasst bevorzugt Polyethylenterephthalat, Ethylenvinylalkohol, orienterten Ethylenvinylalkohol, Polyvinylidenchlorid, Polyamide, Polyethylen, Polypropylen, orientiertes Polypropylen, biaxial orientiertes Polypropylen, orientiertes Polyethylenterephthalat, biaxial orientiertes Polyethylenterephthalat oder besteht aus einem der genannten Polymere.

Eine polymere Schicht hat bevorzugt eine Dicke von 5 µm bis 24 µm, bevorzugt von 10 µm bis 15 µm, besonders bevorzugt von 12 µm. Diese Dicken führen zu einem insgesamt besonders stabilen Mehrschichtensystem.

Eine Verklebungsschicht zum Verkleben von beschichteten oder unbeschichteten Folien zu einem Mehrschichtensystem hat bevorzugt eine Dicke von 1 µm bis 8 µm, bevorzugt von 2 µm bis 6 µm. Dies gewährleistet eine sichere Verklebung.

Eine anorganische Barriereschicht des Mehrschichtensystems ist bevorzugt eine metallische oder eine keramische Barriereschicht. Die Dicke einer einzelnen anorganischen Barriereschicht ist bevorzugt im Bereich von 20 nm bis 300 nm, besonders bevorzugt im Bereich von 30 nm bis 100 nm.

Eine metallische Barriereschicht enthält bevorzugt Metalle, Metalloxide oder Legierungen davon oder besteht daraus. Bevorzugt enthält die metallische Barriereschicht Aluminium, Silber, Kupfer, deren Oxide oder Legierungen oder besteht daraus. Diese Barriereschichten zeichnen sich durch eine besonders hohe Dichtigkeit aus.

Eine keramische Barriereschicht umfasst bevorzugt ein Siliciumoxid und/oder Siliciumnitrid oder besteht daraus. Diese Schichten haben bessere wärmeisolierende Eigenschaften als metallische Barriereschichten und können zudem auch transparent ausgeführt werden.

In einer bevorzugten Ausführungsform umfasst das Mehrschichtensystem mit Barrierefunktion als anorganische Barriereschichten ausschließlich metallische Barriereschichten. Dies verbessert die Langzeitstabilität des Abstandhalters, da thermische Spannungen aufgrund unterschiedlicher Materialien innerhalb der Feuchtigkeitsbarriere besser ausgeglichen sind, als bei der Kombination unterschiedlicher Barriereschichten. Ganz besonders bevorzugt umfasst das Mehrschichtensystem mit Barrierefunktion ausschließlich Aluminium-Schichten als metallische Barriereschichten. Aluminium-Schichten haben besonders gute abdichtende Eigenschaften und lassen sich gut verarbeiten.

In einer weiteren bevorzugten Ausführungsform umfasst das Mehrschichtensystem mit Barrierefunktion als anorganische Barriereschichten ausschließlich keramische Barriereschichten aus SiOx oder SiN. Eine solche Feuchtigkeitsbarriere zeichnet sich durch besonders gute wärmeisolierende Eigenschaften aus. Besonders bevorzugt ist die außenliegende Haftschicht aus SiOx. Eine solche Feuchtigkeitsbarriere ist besonders gut als transparente Folie ausführbar.

In einer weiteren bevorzugten Ausführungsform umfasst das Mehrschichtensystem sowohl eine oder mehrere keramische Barriereschichten als auch eine oder mehrere metallische Barriereschichten. Durch eine Kombination der unterschiedlichen Barriereschichten und deren unterschiedlicher Eigenschaften kann eine optimale Abdichtung gegen das Eindringen von Feuchtigkeit als auch gegen den Verlust einer Gasfüllung aus dem inneren Scheibenzwischenraum erzielt werden.

Die Feuchtigkeitsbarriere ist bevorzugt durchgehend in Längsrichtung des Abstandhalters angeordnet, damit in der Isolierverglasung entlang des gesamten umlaufenden Abstandhalterrahmens keine Feuchtigkeit in den inneren Scheibenzwischenraum gelangen kann.

Die Feuchtigkeitsbarriere ist bevorzugt so aufgebracht, dass die an die Verglasungsinnenraumwand grenzenden Bereiche der beiden Seitenwände frei von Feuchtigkeitsbarriere sind. Durch die Anbringung auf der gesamten Außenwand bis auf die Seitenwände wird eine besonders gute Abdichtung des Abstandhalters erreicht. Der Vorteil der von Feuchtigkeitsbarriere freibleibenden Bereiche auf den Seitenwänden liegt in einer Verbesserung des optischen Erscheinungsbilds im verbauten Zustand. Bei einer Feuchtigkeitsbarriere, die bis an die Verglasungsinnenraumwand grenzt, wird dieses in der fertigen Isolierglaseinheit sichtbar. Dies wird zum Teil als ästhetisch unschön wahrgenommen. Bevorzugt beträgt die Höhe des von der Feuchtigkeitsbarriere freibleibenden Bereichs zwischen 1 mm bis 3 mm. In dieser Ausführungsform ist die Feuchtigkeitsbarriere in der fertigen Isolierglaseinheit nicht sichtbar.

In einer alternativen bevorzugten Ausführungsform ist die Feuchtigkeitsbarriere auf den gesamten Seitenwänden angebracht. Optional kann die Feuchtigkeitsbarriere zusätzlich noch auf der Verglasungsinnenraumwand angeordnet sein. Dadurch wird die Abdichtung des Abstandhalters weiter verbessert.

Der Hohlraum des erfindungsgemäßen Abstandhalters führt zu einer Gewichtsreduktion im Vergleich zu einem massiv ausgeformten Abstandhalter und steht zur Aufnahme von weiteren Komponenten, wie beispielsweise eines Trockenmittels, zur Verfügung.

Die erste Seitenwand und die zweite Seitenwand stellen die Seiten des Abstandhalters dar, an denen beim Einbau des Abstandhalters die Montage der äußeren Scheiben einer Isolierglaseinheit erfolgt. Die erste Seitenwand und die zweite Seitenwand verlaufen parallel zueinander.

Die Außenwand des Hohlprofils ist die der Verglasungsinnenraumwand gegenüberliegende Wand, die vom Innenraum der Isolierglaseinheit (innerer Scheibenzwischenraum) weg in Richtung des äußeren Scheibenzwischenraums weist. Die Außenwand verläuft bevorzugt im Wesentlichen senkrecht zu den Seitenwänden. Eine plane Außenwand, die sich in ihrem gesamten Verlauf senkrecht zu den Seitenwänden (parallel zur Verglasungsinnenraumwand) verhält, hat den Vorteil, dass die Dichtfläche zwischen Abstandhalter und Seitenwänden maximiert wird und eine einfachere Formgebung den Produktionsprozess erleichtert.

In einer bevorzugten Ausführungsform des erfindungsgemäßen Abstandhalters sind die den Seitenwänden nächstliegenden Abschnitte der Außenwand in einem Winkel α (alpha) von 30° bis 60° zur Außenwand in Richtung der Seitenwände geneigt. Diese Ausführung verbessert die Stabilität des polymeren Hohlprofils. Bevorzugt sind die den Seitenwänden nächstliegenden Abschnitte in einem Winkel α (alpha) von 45° geneigt. In diesem Fall ist die Stabilität des Abstandhalters weiter verbessert. Die gewinkelte Anordnung verbessert die Verklebung der Feuchtigkeitsbarriere.

In einer bevorzugten Ausführungsform ist die Feuchtigkeitsbarriere auf das polymere Hohlprofil über einen nichtgasenden Kleber aufgeklebt. Der Unterschied in der Längenausdehnung zwischen Feuchtigkeitsbarriere und polymerem Grundkörper kann zu thermischen Spannungen führen. Durch die Anbringung der Feuchtigkeitsbarriere über einen Kleber können über die Elastizität des Klebers gegebenenfalls Spannungen aufgenommen werden. Als Kleber kommen thermoplastische Kleber, aber auch reaktive Kleber, wie Mehrkomponentenkleber in Frage. Bevorzugt wird als Kleber ein thermoplastisches Polyurethan oder ein Polymethacrylat verwendet. Dieses hat sich in Versuchen als besonders geeignet erwiesen.

In einer bevorzugten Ausführungsform des erfindungsgemäßen Abstandhalters hat das polymere Hohlprofil eine im Wesentlichen einheitliche Wandstärke d. Die Wandstärke d liegt bevorzugt im Bereich von 0,5 mm bis 2 mm. In diesem Bereich ist der Abstandhalter besonders stabil.

In einer bevorzugten Ausführungsform des erfindungsgemäßen Abstandhalters enthält das Hohlprofil biobasierte Polymere, Polyethylen (PE), Polycarbonate (PC), Polypropylen (PP), Polystyrol, Polyester, Polyethylenterephtalate (PET), Polyethylenterephtalat-Glykol (PET-G), Polyoxymethylen (POM), Polyamide, Polyamid-6,6, Polybutylenterephthalat (PBT), Acrylnitril-Butadien-Styrol (ABS), Acrylester-Styrol-Acrylnitril (ASA), Acrylnitril-Butadien-Styrol - Polycarbonat (ABS/PC), Styrol-Acrylnitril (SAN), PET/PC, PBT/PC, oder Copolymere davon. In einer besonders bevorzugten Ausführungsform besteht das Hohlprofil im Wesentlichen aus einem der gelisteten Polymere.

Das polymere Hohlprofil ist bevorzugt glasfaserverstärkt. Durch die Wahl des Glasfaseranteils im polymeren Hohlprofil kann der Wärmeausdehnungskoeffizient des polymeren Hohlprofils variiert und angepasst werden. Durch Anpassung des Wärmeausdehnungskoeffizienten des Hohlprofils und der Feuchtigkeitsbarriere lassen sich temperaturbedingte Spannungen zwischen den unterschiedlichen Materialien und ein Abplatzen der Feuchtigkeitsbarriere vermeiden. Das polymere Hohlprofil weist bevorzugt einen Glasfaseranteil von 20 Gew.-% bis 50 Gew.-%, besonders bevorzugt von 30 Gew.-% bis 40 Gew.-% auf. Der Glasfaseranteil im polymeren Hohlprofil verbessert gleichzeitig die Festigkeit und Stabilität. Glasfaserverstärkte Abstandhalter sind in der Regel starre Abstandhalter, die beim Zusammenbau eines Abstandhalterrahmens für eine Isolierglaseinheit aus einzelnen geraden Stücken zusammengesteckt oder geschweißt werden. Die Verbindungsstellen müssen dabei separat mit einem Dichtmittel abgedichtet werden, um eine optimale Abdichtung eines Abstandhalterrahmens zu gewährleisten. Der erfindungsgemäße Abstandhalter lässt sich aufgrund der hohen Stabilität der Feuchtigkeitsbarriere und der besonders guten Haftung zum Dichtmittel besonders gut verarbeiten.

In einer alternativen bevorzugten Ausführungsform enthält das Hohlprofil keine Glasfasern. Die Anwesenheit von Glasfasern verschlechtert die wärmeisolierenden Eigenschaften des Abstandhalters und macht den Abstandhalter starr und spröde. Hohlprofile ohne Glasfasern können besser gebogen werden, wobei das Abdichten der Verbindungsstellen entfällt. Während des Biegens ist der Abstandhalter besonderen mechanischen Belastungen ausgesetzt. Insbesondere in den Ecken eines Abstandhalterrahmens wird die Feuchtigkeitsbarriere stark gedehnt. Der erfindungsgemäße Aufbau des Abstandhalters mit Feuchtigkeitsbarriere ermöglicht auch das Biegen des Abstandhalters ohne die Abdichtung der Isolierglaseinheit zu beeinträchtigen.

In einer weiteren bevorzugten Ausführungsform besteht das polymere Hohlprofil aus einem geschäumten Polymer. Dabei wird während der Herstellung des polymeren Hohlprofils ein Schäumungsmittel zugesetzt. Beispiele für geschäumte Abstandhalter sind offenbart in WO2016139180 A1. Die geschäumte Ausführung führt zu einer verringerten Wärmeleitung durch das polymere Hohlprofil und einer Material- und Gewichtseinsparung im Vergleich zu einem massiven polymeren Hohlprofil.

In einer bevorzugten Ausführungsform weist die Verglasungsinnenraumwand mindestens eine Perforierung auf. Bevorzugt sind mehrere Perforierungen in der Verglasungsinnenraumwand angebracht. Die Gesamtzahl der Perforierungen hängt dabei von der Größe der Isolierglaseinheit ab. Die Perforierungen in der Verglasungsinnenraumwand verbinden den Hohlraum mit dem inneren Scheibenzwischenraum einer Isolierglaseinheit, wodurch ein Gasaustausch zwischen diesen möglich wird. Dadurch wird eine Aufnahme von Luftfeuchtigkeit durch ein im Hohlraum befindliches Trockenmittel erlaubt und somit ein Beschlagen der Scheiben verhindert. Die Perforierungen sind bevorzugt als Schlitze ausgeführt, besonders bevorzugt als Schlitze mit einer Breite von 0,2 mm und einer Länge von 2 mm. Die Schlitze gewährleisten einen optimalen Luftaustausch ohne dass Trockenmittel aus dem Hohlraum in den inneren Scheibenzwischenraum eindringen kann. Die Perforierungen können nach Herstellung des Hohlprofils einfach in die Verglasungsinnenraumwand gestanzt oder gebohrt werden. Bevorzugt werden die Perforierungen warm in die Verglasungsinnenraumwand gestanzt.

In einer alternativen bevorzugten Ausführungsform ist das Material der Verglasungsinnenraumwand porös oder mit einem diffusionsoffenen Kunststoff ausgeführt, sodass keine Perforierungen erforderlich sind.

Das polymere Hohlprofil weist bevorzugt entlang der Verglasungsinnenraumwand eine Breite von 5 mm bis 55 mm, bevorzugt von 10 mm bis 20 mm auf. Die Breite ist im Sinne der Erfindung die sich zwischen den Seitenwänden erstreckende Dimension. Die Breite ist der Abstand zwischen den voneinander abgewandten Flächen der beiden Seitenwände. Durch die Wahl der Breite der Verglasungsinnenraumwand wird der Abstand zwischen den Scheiben der Isolierglaseinheit bestimmt. Das genaue Abmaß der Verglasungsinnenraumwand richtet sich nach den Dimensionen der Isolierglaseinheit und der gewünschten Scheibenzwischenraumgröße.

Das Hohlprofil weist bevorzugt entlang der Seitenwände eine Höhe von 5 mm bis 15 mm, besonders bevorzugt von 6 mm bis 10 mm, auf. In diesem Bereich für die Höhe besitzt der Abstandhalter eine vorteilhafte Stabilität, ist aber andererseits in der Isolierglaseinheit vorteilhaft unauffällig. Außerdem weist der Hohlraum des Abstandhalters eine vorteilhafte Größe zur Aufnahme einer geeigneten Menge an Trockenmittel auf. Die Höhe des Abstandhalters ist der Abstand zwischen den voneinander abgewandten Flächen der Außenwand und der Verglasungsinnenraumwand.

Im Hohlraum ist bevorzugt ein Trockenmittel enthalten, bevorzugt Kieselgele, Molekularsiebe, CaCl₂, Na₂SO₄, Aktivkohle, Silikate, Bentonite, Zeolithe und/oder Gemische davon.

Die Erfindung umfasst des Weiteren eine Isolierglaseinheit mit mindestens einer ersten Scheibe, einer zweiten Scheibe, einem umlaufenden zwischen erster und zweiter Scheibe angeordneten erfindungsgemäßen Abstandhalter, einem inneren Scheibenzwischenraum und einem äußeren Scheibenzwischenraum. Der erfindungsgemäße Abstandhalter ist zu einem umlaufenden Abstandhalterrahmen angeordnet. Die erste Scheibe ist dabei an der ersten Seitenwand des Abstandshalters über ein primäres Dichtmittel angebracht, und die zweite Scheibe ist an der zweiten Seitenwand über ein primäres Dichtmittel angebracht. Das bedeutet, zwischen der ersten Seitenwand und der ersten Scheibe sowie zwischen der zweiten Seitenwand und der zweiten Scheibe ist ein primäres Dichtmittel angeordnet. Die erste Scheibe und die zweite Scheibe sind parallel und bevorzugt deckungsgleich angeordnet. Die Kanten der beiden Scheiben sind daher im Randbereich bevorzugt bündig angeordnet, das heißt sie befinden sind auf gleicher Höhe. Der innere Scheibenzwischenraum wird von der ersten und zweiten Scheibe und der Verglasungsinnenraumwand begrenzt. Der äußere Scheibenzwischenraum ist definiert als der Raum, der durch die erste Scheibe, die zweite Scheibe und die Feuchtigkeitsbarriere auf der Außenwand des Abstandhalters begrenzt ist. Der äußere Scheibenzwischenraum ist mindestens teilweise mit einem sekundären Dichtmittel verfüllt, wobei das sekundäre Dichtmittel in direktem Kontakt steht mit der außenliegenden Haftschicht. Das sekundäre Dichtmittel trägt zur mechanischen Stabilität der Isolierglaseinheit bei und nimmt einen Teil der Klimalasten auf, die auf den Randverbund wirken.

In einer bevorzugten Ausführungsform der erfindungsgemäßen Isolierglaseinheit bedeckt das primäre Dichtmittel den Übergang zwischen polymerem Hohlprofil und Feuchtigkeitsbarriere, sodass eine besonders gute Abdichtung der Isolierglaseinheit erzielt wird. Auf diese Weise wird die Diffusion von Feuchtigkeit in den Hohlraum des Abstandhalters an der Stelle, wo die Feuchtigkeitsbarriere an den Kunststoff grenzt, verringert (weniger Grenzflächendiffusion).

In einer weiteren bevorzugten Ausführungsform der erfindungsgemäßen Isolierglaseinheit ist das sekundäre Dichtmittel entlang der ersten Scheibe und der zweiten Scheibe so aufgebracht, dass ein mittlerer Bereich der Außenwand frei von sekundärem Dichtmittel ist. Der mittlere Bereich bezeichnet den in Bezug auf die beiden äußeren Scheiben mittig angeordneten Bereich, im Gegensatz zu den beiden äußeren Bereichen der Außenwand, die benachbart zur ersten Scheibe und zweiten Scheibe sind. Auf diese Weise wird eine gute Stabilisierung der Isolierglaseinheit erzielt, wobei gleichzeitig Materialkosten für das sekundäre Dichtmittel gespart werden. Gleichzeitig lässt sich diese Anordnung leicht herstellen, indem zwei Stränge aus sekundärem Dichtmittel jeweils auf die Außenwand im äußeren Bereich angrenzend an die äußeren Scheiben aufgebracht werden.

In einer weiteren bevorzugten Ausführungsform ist das sekundäre Dichtmittel so angebracht, dass der gesamte äußere Scheibenzwischenraum vollständig mit sekundärem Dichtmittel gefüllt ist. Dies führt zu einer maximalen Stabilisierung der Isolierglaseinheit.

Bevorzugt enthält das sekundäre Dichtmittel Polymere oder silanmodifizierte Polymere, besonders bevorzugt organische Polysulfide, Silikone, Hotmelt, Polyurethane, raumtemperaturvernetzenden (RTV) Silikonkautschuk, peroxidischvernetzten Silikonkautschuk und/oder additions-vernetzten Silikonkautschuk. Diese Dichtmittel haben eine besonders gute stabilisierende Wirkung. Mit dem erfindungsgemäßen Abstandhalter wurden dank der Haftschicht für das gesamte Spektrum an üblichen sekundären Dichtmitteln hervorragende Haftungsergebnisse erzielt.

Das primäre Dichtmittel enthält bevorzugt ein Polyisobutylen. Das Polyisobutylen kann ein vernetzendes oder nicht vernetzendes Polyisobutylen sein.

Die erste Scheibe und die zweite Scheibe der Isolierglaseinheit enthalten bevorzugt Glas, Keramik und/oder Polymere, besonders bevorzugt Quarzglas, Borosilikatglas, Kalk-Natron-Glas, Polymethylmethacrylat oder Polycarbonat.

Die erste Scheibe und die zweite Scheibe verfügen über eine Dicke von 2 mm bis 50 mm, bevorzugt 3 mm bis 16 mm, wobei beide Scheiben auch unterschiedliche Dicken haben können.

In einer bevorzugten Ausführungsform der erfindungsgemäßen Isolierglaseinheit besteht der Abstandhalterrahmen aus einem oder mehreren erfindungsgemäßen Abstandhaltern. Es kann sich zum Beispiel um einen erfindungsgemäßen Abstandhalter handeln, der zu einem vollständigen Rahmen gebogen ist. Es kann sich auch um mehrere erfindungsgemäße Abstandhalter handeln, die über einen oder mehrere Steckverbinder miteinander verknüpft sind. Die Steckverbinder können als Längsverbinder oder Eckverbinder ausgeführt sein. Derartige Eckverbinder können beispielsweise als Kunststoffformteil mit Dichtung ausgeführt sein, in dem zwei mit einem Gehrungsschnitt versehene Abstandhalter zusammenstoßen.

Grundsätzlich sind verschiedenste Geometrien der Isolierglaseinheit möglich, beispielsweise rechteckige, trapezförmige und abgerundete Formen. Zur Herstellung runder Geometrien kann der erfindungsgemäße Abstandhalter beispielsweise im erwärmten Zustand gebogen werden.

In einer weiteren Ausführungsform umfasst die Isolierverglasung mehr als zwei Scheiben. Dabei kann der Abstandhalter zum Beispiel Nuten enthalten, in denen mindestens eine weitere Scheibe angeordnet ist. Es könnten auch mehrere Scheiben als Verbundglasscheibe ausgebildet sein.

Die Erfindung umfasst weiterhin die Verwendung der erfindungsgemäßen Isolierglaseinheit als Gebäudeinnenverglasung, Gebäudeaußenverglasung und / oder Fassadenverglasung.

### Beispiele:

Der erfindungsgemäße Abstandhalter ist gegenüber den bekannten Abstandhaltern in Bezug auf die Langzeitstabilität verbessert. Zu Testzwecken wurden erfindungsgemäße Abstandhalter Adhäsionstests unterzogen, die jeweils vor und nach Alterungsversuchen durchgeführt wurden. Für einen Alterungsversuch wurden Abstandhalter mit einem polymeren Hohlprofil aus Styrol-Acryl-Nitril mit etwa 35 Gew.-% Glasfaser mit einem Streifen aus sekundärem Dichtmittel in Form eines Polysulfids beschichtet und über 2 Wochen bei 58°C und einer relativen Luftfeuchtigkeit von über 95% gelagert. Diese Bedingungen sollen 20 Jahre Einsatz in einer Isolierglaseinheit simulieren. Anschließend wurden die beschichteten Abstandhalter einem Zugversuch nach EN1279 unterzogen. Nach 10 Minuten wurde die Zugkraft erhöht, bis ein Bruch zwischen Abstandhalter und Dichtmittel auftrat, beziehungsweise ein Ablösen der Folie beobachtet wurde.

Ein Ablösen des Dichtmittels von der auf den Abstandhalter aufgebrachten Feuchtigkeitsbarriere ist nicht wünschenswert. Ein solches Bruchbild deutet darauf hin, dass bei einer Isolierverglasung mit einem solchen Abstandhalter ein frühzeitiges Versagen der Randversiegelung auftritt, da die mechanische Belastung im Zusammenhang mit Klimalasten zu einem Ablösen des Dichtmittels vom Abstandhalter führt. Wenn ein Bruch im Versuch dagegen im Bereich des Dichtmittels auftritt, führt die Verwendung eines solchen Abstandhalters zu einer Isolierverglasung mit verbesserter Langzeitstabilität. Ein solches Bruchbild wird als "kohäsiver Bruch" bezeichnet. Der Bruch im Dichtmittel kann dabei an einer Stelle relativ weit entfernt vom Abstandhalter als auch in der Nähe der Grenzfläche Dichtmittel / Feuchtigkeitsbarriere stattfinden. Als Dichtmittel wurde ein Polysulfid verwendet, das unter dem Markenname Thiover ^{®} käuflich erhältlich ist.

**Tabelle 1:**

| | Schichtenfolge: Haftschicht 31/ Anbindungsschicht 32/ Mehrschichtensystem mit Barrierefunktion 33 | Bruchbild nach Alterungsversuch |
|---|---|---|
| Beispiel | CrOx 30 nm / oPP 19 µm / Al 50 nm / PET 12 µm / Al 50 nm / PET 12 µm / Al 50 nm / LLDPE 12 µm | > 80% kohäsiver Bruch |
| Vergleichsbeispiel | SiOx 30 nm / PET 12 µm / Al 50 nm / PET 12 µm / Al 50 nm / PET 12 µm / Al 50 nm / LLDPE 12 µm | 0 % kohäsiver Bruch |

Tabelle 1 zeigt einen Aufbau eines erfindungsgemäßen Beispiels mit einer Haftschicht aus 30 nm dickem Chromoxid und einer Anbindungsschicht aus 19 µm dickem oPP. Daran schließt sich ein Barriereblock aus drei Aluminiumschichten, zwei PET-Schichten und einer LLDPE (lineares Polyethylen niedriger Dichte) Schicht an. Im Versuch wurde in mehr als 80% ein kohäsiver Bruch, das heißt ein Bruch im Bereich des sekundären Dichtmittels beobachtet. Dies spricht dafür, dass die Verwendung eines solchen Abstandhalters zu einer besonders langzeitstabilen Isolierverglasung führt.

Das Vergleichsbeispiel ist aufgebaut aus einer äußeren SiOx-Schicht, die zur Verbesserung der Haftung dient und einem Barrieresystem. Für diesen Aufbau wurde in keinem Fall ein kohäsiver Bruch beobachtet. Stattdessen trat entweder eine Zerstörung der Folie auf, das heißt ein Bruch innerhalb der Feuchtigkeitsbarriere, oder es wurde ein Ablösen des sekundären Dichtmittels von der Feuchtigkeitsbarriere beobachtet. Dies zeigt, dass eine Isolierverglasung mit einem Abstandhalter ohne einen erfindungsgemäßen Aufbau mit Anbindungsschicht und Haftschicht anfällig ist für ein Versagen im Bereich der Randversiegelung.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
- Figur 1: einen Querschnitt einer möglichen Ausführungsform eines erfindungsgemäßen Abstandhalters,
- Figur 2: einen Querschnitt einer möglichen Ausführungsform einer Feuchtigkeitsbarriere eines erfindungsgemäßen Abstandhalters,
- Figur 3: einen Querschnitt einer möglichen Ausführungsform einer Feuchtigkeitsbarriere eines erfindungsgemäßen Abstandhalters,
- Figur 4: einen Querschnitt einer möglichen Ausführungsform einer Feuchtigkeitsbarriere eines erfindungsgemäßen Abstandhalters,
- Figur 5: einen Querschnitt einer möglichen Ausführungsform einer erfindungsgemäßen Isolierglaseinheit.

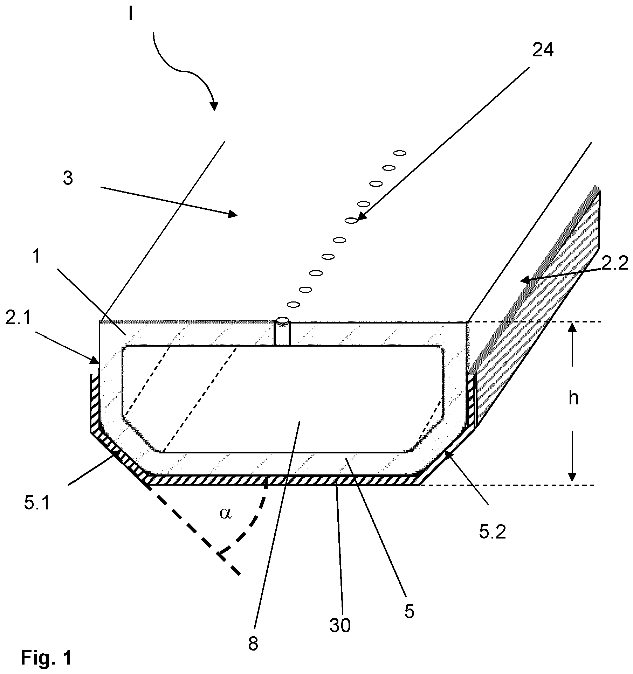

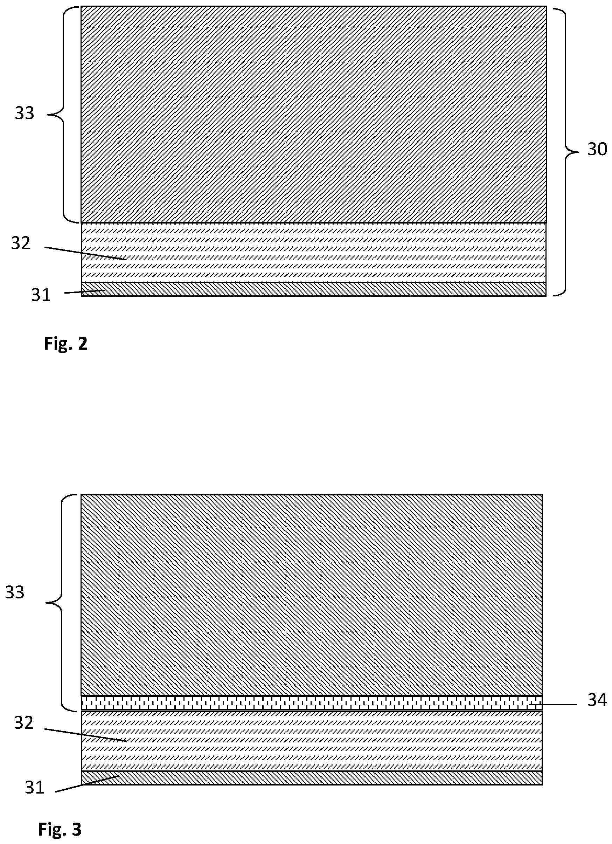

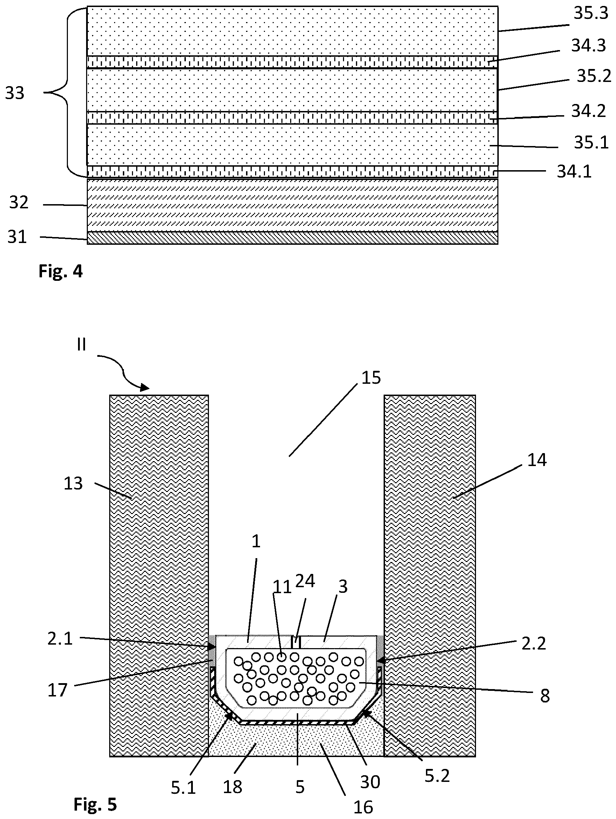

Figur 1 zeigt einen Querschnitt durch einen möglichen erfindungsgemäßen Abstandhalter I. Der Abstandhalter umfasst ein polymeres Hohlprofil 1 mit einer ersten Seitenwand 2.1, einer parallel dazu verlaufenden Seitenwand 2.2, einer Verglasungsinnenraumwand 3 und einer Außenwand 5. Die Verglasungsinnenraumwand 3 verläuft senkrecht zu den Seitenwänden 2.1 und 2.2 und verbindet die beiden Seitenwände. Die Außenwand 5 liegt gegenüber der Verglasungsinnenraumwand 3 und verbindet die beiden Seitenwände 2.1 und 2.2. Die Außenwand 5 verläuft im Wesentlichen senkrecht zu den Seitenwänden 2.1 und 2.2. Die den Seitenwänden 2.1 und 2.2 nächstliegenden Abschnitte 5.1 und 5.2 der Außenwand 5 sind jedoch in einem Winkel α (alpha) von etwa 45 ° zur Außenwand 5 in Richtung der Seitenwände 2.1 und 2.2 geneigt. Die abgewinkelte Geometrie verbessert die Stabilität des Hohlprofils 1 und ermöglicht eine bessere Verklebung mit einer Feuchtigkeitsbarriere 30. Das Hohlprofil 1 ist ein polymeres Hohlprofil, das im Wesentlichen aus Polypropylen mit 20 Gew.-% Glasfasern besteht. Die Wandstärke des Hohlprofils beträgt 1 mm. Die Wandstärke ist im Wesentlichen überall gleich. Dies verbessert die Stabilität des Hohlprofils und vereinfacht die Herstellung. Das Hohlprofil 1 weist beispielsweise eine Höhe h von 6,5 mm und eine Breite von 15,5 mm auf. Die Außenwand 5, die Verglasungsinnenraumwand 3 und die beiden Seitenwände 2.1 und 2.2 umschließen den Hohlraum 8. Eine gasdichte und feuchtigkeitsdichte Feuchtigkeitsbarriere 30 ist auf der Außenwand 5 und einem Teil der ersten Seitenwand 2.1 und einem Teil der zweiten Seitenwand 2.2 angeordnet. Die an die Verglasungsinnenraumwand 3 grenzenden Bereiche der ersten Seitenwand 2.1 und der zweiten Seitenwand 2.2 bleiben frei von Feuchtigkeitsbarriere 30. Von der Verglasungsinnenraumwand 3 gemessen, ist dies ein 1,9 mm breiter Streifen, der freibleibt. Die Feuchtigkeitsbarriere 30 kann beispielsweise mit einem Polymethacrylat-Klebstoff auf dem polymeren Hohlprofil 1 befestigt werden. Als Feuchtigkeitsbarriere 30 eignen sich zum Beispiel die in den Figuren 2 bis 4 gezeigten Ausführungsformen. Der Hohlraum 8 kann ein Trockenmittel 11 aufnehmen. In der Verglasungsinnenraumwand 3 sind Perforierungen 24 angebracht, die in der Isolierglaseinheit eine Verbindung zum inneren Scheibenzwischenraum herstellen. Über die Perforierungen 24 in der Verglasungsinnenraumwand 3 kann das Trockenmittel 11 dann Feuchtigkeit aus dem inneren Scheibenzwischenraum 15 aufnehmen (siehe Figur 5).

Figur 2 zeigt einen Querschnitt durch eine Feuchtigkeitsbarriere 30 eines erfindungsgemäßen Abstandhalters I. Die Feuchtigkeitsbarriere 30 umfasst eine außenliegende Haftschicht 31 aus Chromoxid. Außenliegend bedeutet, dass die Haftschicht 31 zur äußeren Umgebung weist und freiliegt. In der fertigen Isolierglaseinheit weist die Haftschicht 31 zum äußeren Scheibenzwischenraum und steht in direktem Kontakt mit dem sekundären Dichtmittel. Die Chromoxid-Schicht weist eine besonders gute Haftung zum Material des sekundären Dichtmittels auf. Direkt angrenzend an die Chromoxid-Schicht ist eine etwa 20 µm dicke Anbindungsschicht 32 aus orientiertem Polypropylen angeordnet. Die Chromoxid-Schicht ist direkt über ein CVD-Verfahren auf die oPP-Schicht aufgebracht und hat eine Dicke von 10 nm bis 100 nm. Die Haftung zwischen Chromoxid-Schicht und oPP-Schicht ist überraschend gut, sodass die Stabilität des Abstandhalters mit Feuchtigkeitsbarriere verbessert ist im Vergleich zum Stand der Technik. Angrenzend an die Anbindungsschicht 32 ist ein Mehrschichtensystem mit Barrierefunktion 33 angeordnet. Dieses Mehrschichtensystem umfasst eine oder mehrere polymere Schichten und eine oder mehrere anorganische Schichten. Das Mehrschichtensystem 33 ist auf der einen Seite auf eine beliebige Art mit der Anbindungsschicht 32 verbunden. Dies ist zum Beispiel möglich über eine Verklebungsschicht. Die andere Seite des Mehrschichtensystems 33 ist zur Außenwand 5 des Abstandhalters gerichtet. Das Mehrschichtensystem 33 wird über einen Kleber, bevorzugt einen Polyurethan-Schmelzkleber oder einen AcrylatKleber auf dem Hohlprofil 1 befestigt. Als Mehrschichtensystem 33 eignen sich verschiedene Barrierefolien aus dem Stand der Technik, wie zum Beispiel beschrieben in der WO 2013/104507 A1.

Figur 3 zeigt einen Querschnitt durch eine Feuchtigkeitsbarriere 30 eines erfindungsgemäßen Abstandhalters I. Wie bereits für Figur 2 erläutert, ist ein Mehrschichtensystem 33 auf der zur Außenwand 5 des Abstandhalters weisenden Seite angeordnet. Die Befestigung auf der Außenwand erfolgt vorteilhaft über einen Kleber. Das Mehrschichtensystem 33 umfasst eine oder mehrere polymere Schichten 35 aus zum Beispiel Polyethylen oder PET und eine oder mehrere keramische Schichten 34 aus SiOx, aber keine metallische Schicht. In Figur 3 ist beispielhaft eine Ausgestaltung gezeigt, in der eine keramische Schicht 34 des Mehrschichtensystems 33 direkt auf der Anbindungsschicht 32 angeordnet ist. Die Anbindungsschicht 32 ist im Beispiel eine 25 µm dicke oPET-Folie. Eine so dicke oPET-Schicht trägt unter anderem zur Verbesserung der mechanischen Belastbarkeit des Abstandhalters I insbesondere beim Biegen des Abstandhalters bei. Auf der einen Seite der Anbindungsschicht 32 ist eine 30 nm dicke keramische SiOx-Schicht als Haftschicht 31 angeordnet, die die Haftung zum sekundären Dichtmittel verbessert. Auf der anderen Seite der oPET-Folie ist ebenfalls eine 30 nm dicke keramische SiOx-Schicht angeordnet. Eine so aufgebaute Feuchtigkeitsbarriere lässt sich besonders gut herstellen, da auf der in Richtung des äußeren Scheibenzwischenraums weisenden Seite der Feuchtigkeitsbarriere 30 eine beidseitig mit SiOx beschichtete oPET-Folie angeordnet werden kann, die sich leicht herstellen lässt. Ein weiterer Vorteil dieses Aufbaus ist, dass das Mehrschichtensystem nur keramische Schichten umfasst und keine metallischen Schichten. Damit ist die Wärmeleitfähigkeit besonders gering, was die wärmeisolierenden Eigenschaften weiter verbessert.

Figur 4 zeigt einen Querschnitt durch eine Feuchtigkeitsbarriere 30 eines erfindungsgemäßen Abstandhalters I. Als äußere Haftschicht 31 ist eine 30 nm dicke Siliciumoxid-Schicht über einen CVD-Prozess auf eine etwa 20 µm dicke Anbindungsschicht 32 aus oPP aufgetragen. Daran angrenzend ist ein Mehrschichtensystem mit Barrierefunktion 33 angeordnet, das aus drei polymeren Schichten 35.1, 35.2 und 35.3 und drei anorganischen Barriereschichten 34.1, 34.2 und 34.3 besteht. Die anorganischen Barriereschichten sind jeweils 50 nm dicke Aluminiumschichten. Die polymeren Schichten 35.1 und 35.2 sind jeweils 12 µm dicke PET-Schichten. Die polymere Schicht 35.3 ist eine 12 µm dicke LLDPE-Schicht. Die erste polymere Schicht 35.1 ist direkt mit der ersten Aluminiumschicht 34.1 verbunden. Die zweite polymere Schicht 35.2 ist direkt mit der zweiten Aluminiumschicht 34.2 verbunden. Die dritte polymere Schicht 35.3 ist direkt mit der dritten Aluminiumschicht 34.3 verbunden. Zwischen der Anbindungsschicht 32 und der ersten Aluminiumschicht 34.1 ist eine 3 µm dicke Verklebungsschicht aus einem Polyurethankleber angeordnet. Zwischen der zweiten Aluminiumschicht 34.2 und der ersten polymeren Schicht 35.1 ist ebenfalls eine Verklebungsschicht angeordnet. Zwischen der dritten Aluminiumschicht 34.3 und der zweiten polymeren Schicht 35.2 ist ebenfalls eine Verklebungsschicht angeordnet. Somit sind im gesamten Stapel der Feuchtigkeitsbarriere 30 drei Verklebungsschichten angeordnet. Die Herstellung der Feuchtigkeitsbarriere kann somit durch kaschieren von vier einseitig beschichteten Polymerfolien erfolgen: eine einseitig beschichtete oPP-Folie mit zwei einseitig beschichteten PET-Folien und einer einseitig beschichteten LLDPE-Folie. Durch die Orientierung der dritten Aluminiumschicht 34.3 zum Schichtstapel hingewandt wird die dritte Aluminiumschicht 34.3 vor mechanischen Beschädigungen geschützt. Die drei dünnen Aluminiumschichten sorgen für eine hohe Feuchtigkeitsdichte der Feuchtigkeitsbarriere und somit des Abstandhalters.

Figur 5 zeigt einen Querschnitt des Randbereichs einer erfindungsgemäßen Isolierglaseinheit II mit dem in Figur 1 dargestellten Abstandhalter I. Die erste Scheibe 13 ist über ein primäres Dichtmittel 17 mit der ersten Seitenwand 2.1 des Abstandhalters I verbunden, und die zweite Scheibe 14 ist über das primäre Dichtmittel 17 an der zweiten Seitenwand 2.2 angebracht. Das primäre Dichtmittel 17 ist im Wesentlichen ein vernetzendes Polyisobutylen. Der innere Scheibenzwischenraum 15 befindet sich zwischen der ersten Scheibe 13 und der zweiten Scheibe 14 und wird von der Verglasungsinnenraumwand 3 des erfindungsgemäßen Abstandhalters I begrenzt. Der innere Scheibenzwischenraum 15 ist luftgefüllt oder mit einem inerten Gas wie Argon befüllt. Der Hohlraum 8 ist mit einem Trockenmittel 11, zum Beispiel Molsieb, gefüllt. Über Perforierungen 24 in der Verglasungsinnenraumwand 3 ist der Hohlraum 8 mit dem inneren Scheibenzwischenraum 15 verbunden. Durch die Perforierungen 24 in der Verglasungsinnenraumwand 3 findet ein Gasaustausch zwischen dem Hohlraum 8 und dem inneren Scheibenzwischenraum 15 statt, wobei das Trockenmittel 11 die Luftfeuchtigkeit aus dem inneren Scheibenzwischenraum 15 aufnimmt. Die erste Scheibe 13 und die zweite Scheibe 14 ragen über die Seitenwände 2.1 und 2.2 hinaus, sodass ein äußerer Scheibenzwischenraum 16 entsteht, der sich zwischen erster Scheibe 13 und zweiter Scheibe 14 befindet und durch die Außenwand 5 mit der Feuchtigkeitsbarriere 30 des Abstandhalters begrenzt wird. Die Kante der ersten Scheibe 13 und die Kante der zweiten Scheibe 14 sind auf einer Höhe angeordnet. Der äußere Scheibenzwischenraum 16 ist mit einem sekundären Dichtmittel 18 verfüllt. Das sekundäre Dichtmittel 18 ist im Beispiel ein Polysulfid. Polysulfide nehmen die auf den Randverbund wirkenden Kräfte besonders gut auf und tragen so zu einer hohen Stabilität der Isolierglaseinheit II bei. Die Haftung von Polysulfiden zur Haftschicht des erfindungsgemäßen Abstandhalters ist ausgezeichnet. Die erste Scheibe 13 und die zweite Scheibe 14 bestehen aus Kalk-Natron-Glas mit einer Dicke von 3 mm.

### Bezugszeichenliste

- I: Abstandhalter
- II: Isolierglaseinheit
- 1: Hohlprofil
- 2.1: erste Seitenwand
- 2.2: zweite Seitenwand
- 3: Verglasungsinnenraumwand
- 5: Außenwand
- 5.1, 5.2: die den Seitenwänden nächstliegenden Abschnitte der Außenwand
- 8: Hohlraum
- 11: Trockenmittel
- 13: erste Scheibe
- 14: zweite Scheibe
- 15: innerer Scheibenzwischenraum
- 16: äußerer Scheibenzwischenraum
- 17: primäres Dichtmittel
- 18: sekundäres Dichtmittel
- 24: Perforierung in der Verglasungsinnenraumwand
- 30: Feuchtigkeitsbarriere
- 31: Haftschicht
- 32: Anbindungsschicht
- 33: Mehrschichtensystem mit Barrierefunktion
- 34: anorganische Barriereschicht
- 35: polymere Schicht

## Patentansprüche

1. Abstandhalter (I) für Isolierglaseinheiten, mindestens umfassend
- ein polymeres Hohlprofil (1), umfassend
- eine erste Seitenwand (2.1) und eine parallel dazu angeordnete zweite Seitenwand (2.2), eine Verglasungsinnenraumwand (3), die die Seitenwände (2.1, 2.2) miteinander verbindet;
- eine Außenwand (5), die im Wesentlichen parallel zur Verglasungsinnenraumwand (3) angeordnet ist und die Seitenwände (2.1, 2.2) miteinander verbindet;
- einen Hohlraum (5), der von den Seitenwänden (2.1, 2.2), der Verglasungsinnenraumwand (3) und der Außenwand (5) umschlossen wird,
- eine Feuchtigkeitsbarriere (30) auf der ersten Seitenwand (2.1), der Außenwand (5) und auf der zweiten Seitenwand (2.2) des polymeren Hohlkörpers (1), wobei die Feuchtigkeitsbarriere (30) mindestens umfasst
- ein Mehrschichtensystem mit Barrierefunktion (33) umfassend mindestens eine polymere Schicht (35) und eine anorganische Barriereschicht (34),
- eine metallische oder keramische außenliegende Haftschicht (31), wobei die Haftschicht (31) eine Dicke geringer als 100 nm aufweist,
- eine zwischen der Haftschicht (31) und dem Mehrschichtensystem (33) angeordnete Anbindungsschicht (32) enthaltend ein Polymer ausgewählt aus der Gruppe umfassend orientiertes Polypropylen, orientiertes Polyethylenterephthalat, biaxial orientiertes Polypropylen und biaxial orientiertes Polyethylenterephthalat, wobei die Anbindungsschicht (32) direkt an die Haftschicht (31) angrenzt.

2. Abstandhalter (I) nach Anspruch 1, wobei die Haftschicht (31) eine keramische Haftschicht ist und SiOx umfasst oder aus SiOx besteht.

3. Abstandhalter (I) nach Anspruch 1, wobei die Haftschicht (31) eine metallische Haftschicht ist und Aluminium, Titan, Nickel, Chrom, Eisen, Legierungen davon und / oder Oxide davon umfasst oder daraus besteht.

4. Abstandhalter (I) nach Anspruch 3, wobei die Haftschicht (31) im Wesentlichen aus einem Metalloxid besteht, bevorzugt aus Chromoxid oder Titanoxid besteht.

5. Abstandhalter (I) nach einem der Ansprüche 1 bis 4, wobei die Anbindungsschicht (32) eine Dicke von 5 µm bis 35 µm hat, bevorzugt eine Dicke von 8 µm bis 30 µm, besonders bevorzugt eine Dicke von 12 µm bis 25 µm hat.

6. Abstandhalter (I) nach einem der Ansprüche 1 bis 5, wobei die außenliegende Haftschicht (31) mittels chemischer Gasphasenabscheidung (CVD) oder physikalischer Gasphasenabscheidung (PVD) direkt auf die Anbindungsschicht (32) aufgebracht ist.

7. Abstandhalter (I) nach einem der Ansprüche 1 bis 6, wobei die Haftschicht (31) eine Dicke zwischen 5 nm und 70 nm, bevorzugt von 10 nm bis 50 nm, besonders bevorzugt zwischen 20 nm und 30 nm hat.

8. Abstandhalter (I) nach einem der Ansprüche 1 bis 7, wobei das Mehrschichtensystem mit Barrierefunktion (33) mindestens zwei polymere Schichten (35) und mindestens zwei anorganische Barriereschichten (34) umfasst, bevorzugt drei polymere Schichten (35) und drei anorganische Barriereschichten (34) umfasst.

9. Abstandhalter (I) nach einem der Ansprüche 1 bis 8, wobei das Mehrschichtensystem mit Barrierefunktion (33) genau zwei oder drei polymere Schichten (35) und drei anorganische Barriereschichten (34) enthält.

10. Abstandhalter (I) nach einem der Ansprüche 1 bis 9, wobei das Mehrschichtensystem mit Barrierefunktion (33) mindestens eine interne Verklebungsschicht mit einer Dicke von 1 µm bis 8 µm umfasst, bevorzugt von 2 µm bis 6 µm.

11. Abstandhalter (I) nach einem der Ansprüche 1 bis 10, wobei das Mehrschichtensystem mit Barrierefunktion (33) als anorganische Barriereschichten (34) ausschließlich keramische Barriereschichten aus SiOx und/oder SiN umfasst.

12. Abstandhalter (I) nach einem der Ansprüche 1 bis 10, wobei das Mehrschichtensystem mit Barrierefunktion (33) als anorganische Barriereschichten (34) ausschließlich metallische Barriereschichten (34) umfasst, bevorzugt Aluminium-Schichten umfasst.

13. Isolierglaseinheit (II), mindestens umfassend eine erste Scheibe (13), eine zweite Scheibe (14), einen zwischen erster Scheibe (13) und zweiter Scheibe (14) umlaufend angeordneten Abstandhalter (I) nach einem der Ansprüche 1 bis 12, wobei
- die erste Scheibe (13) über ein primäres Dichtmittel (17) an der ersten Seitenwand (2.1) angebracht ist,
- die zweite Scheibe (14) über ein primäres Dichtmittel (17) an der zweiten Seitenwand (2.2) angebracht ist,
- ein innerer Scheibenzwischenraum (15) von der Verglasungsinnenraumwand (3), der ersten Scheibe (13) und der zweiten Scheibe (14) begrenzt wird,
- ein äußerer Scheibenzwischenraum (16) von der auf der Außenwand (5) angebrachten Feuchtigkeitsbarriere (30) und der ersten Scheibe (13) und der zweiten Scheibe (14) begrenzt wird,
- im äußeren Scheibenzwischenraum (16) ein sekundäres Dichtmittel (18) angeordnet ist, wobei das sekundäre Dichtmittel (18) mit der außenliegenden Haftschicht (31) in Kontakt steht.

14. Verwendung der Isolierglaseinheit (II) nach Anspruch 13 als Gebäudeinnenverglasung, Gebäudeaußenverglasung und/oder Fassadenverglasung.

## Claims

1. Spacer (I) for insulating glass units, comprising at least
- a polymeric hollow profile (1), comprising
- a first side wall (2.1) and a second side wall (2.2) arranged parallel thereto, a glazing interior wall (3), which connects the side walls (2.1, 2.2) to one another;
- an outer wall (5), which is arranged substantially parallel to the glazing interior wall (3) and connects the side walls (2.1, 2.2) to one another;
- a cavity (8), which is surrounded by the side walls (2.1, 2.2), the glazing interior wall (3), and the outer wall (5),
- a moisture barrier (30) on the first side wall (2.1), the outer wall (5), and the second side wall (2.2) of the polymeric hollow body (1), wherein the moisture barrier (30) comprises at least
- a multi-layer system having a barrier function (33) comprising at least one polymeric layer (35) and an inorganic barrier layer (34),
- a metallic or ceramic outer adhesive layer (31), wherein the adhesive layer (31) has a thickness of less than 100 nm,
- a binding layer (32) arranged between the adhesive layer (31) and the multi-layer system (33) and containing a polymer selected from the group comprising oriented propylene, oriented polyethylene terephthalate, biaxially oriented propylene, and biaxially oriented polyethylene terephthalate, wherein the binding layer (32) is directly adjacent the adhesive layer (31).

2. Spacer (I) according to claim 1, wherein the adhesive layer (31) is a ceramic adhesive layer and includes SiOx or is made of SiOx.

3. Spacer (I) according to claim 1, wherein the adhesive layer (31) is a metallic adhesive layer and includes or is made of aluminum, titanium, nickel, chromium, iron, alloys thereof and / or oxides thereof.

4. Spacer (I) according to claim 3, wherein the adhesive layer (31) is made substantially of a metal oxide, preferably of chromium oxide or titanium oxide.

5. Spacer (I) according to one of claims 1 through 4, wherein the binding layer (32) has a thickness of 5 µm to 35 µm, preferably a thickness of 8 µm to 30 µm, particularly preferably a thickness of 12 µm to 25 µm.

6. Spacer (I) according to one of claims 1 through 5, wherein the outer adhesive layer (31) is applied directly to the binding layer (32) by means of chemical vapor deposition (CVD) or physical vapor deposition (PVD).

7. Spacer (I) according to one of claims 1 through 6, wherein the adhesive layer (31) has a thickness between 5 nm and 70 nm, preferably from 10 nm to 50 nm, particularly preferably between 20 nm and 30 nm.

8. Spacer (I) according to one of claims 1 through 7, wherein the multi-layer system having a barrier function (33) includes at least two polymeric layers (35) and at least two inorganic barrier layers (34), preferably includes three polymeric layers (35) and three inorganic barrier layers (34).

9. Spacer (I) according to one of claims 1 through 8, wherein the multi-layer system having a barrier function (33) contains exactly two or three polymeric layers (35) and three inorganic barrier layers (34).

10. Spacer (I) according to one of claims 1 through 9, wherein the multi-layer system having a barrier function (33) includes at least one internal bonding layer having a thickness of 1 µm to 8 µm, preferably of 2 µm to 6 µm.

11. Spacer (I) according to one of claims 1 through 10, wherein the multi-layer system having a barrier function (33) includes, as inorganic barrier layers (34), exclusively ceramic barrier layers of SiOx and/or SiN.

12. Spacer (I) according to one of claims 1 through 10, wherein the multi-layer system having a barrier function (33) includes, as inorganic barrier layers (34), exclusively metallic barrier layers (34), preferably aluminum layers.

13. Insulating glass unit (II), at least comprising a first pane (13), a second pane (14), a spacer (I) according to one of claims 1 through 12 arranged circumferentially between the first pane (13) and the second pane (14), wherein
- the first pane (13) is attached to the first side wall (2.1) via a primary sealant (17),
- the second pane (14) is attached to the second side wall (2.2) via a primary sealant (17),
- an inner interpane space (15) is delimited by the glazing interior wall (3), the first pane (13), and the second pane (14),
- an outer interpane space (16) is delimited by the moisture barrier (30) attached on the outer wall (5) and the first pane (13) and the second pane (14),
- a secondary sealant (18) is arranged in the outer interpane space (16), wherein the secondary sealant (18) is in contact with the outer adhesive layer (31).

14. Use of the insulating glass unit (II) according to claim 13 as building interior glazing, building exterior glazing, and/or façade glazing.

## Revendications

1. Entretoise (I) pour vitrages isolant, comprenant au moins
- un profilé creux polymère (1), comprenant
- une première paroi latérale (2.1) et une deuxième paroi latérale (2.2) disposées parallèlement, une paroi intérieure de vitrage (3) qui relie les parois latérales (2.1, 2.2) l'une à l'autre;
- une paroi extérieure (5), disposée sensiblement parallèlement à la paroi intérieure de vitrage (3) et reliant les parois latérales (2.1, 2.2) l'une à l'autre;
- une cavité (8) entourée par les parois latérales (2.1, 2.2), la paroi intérieure du vitrage (3) et la paroi extérieure (5),
- une barrière contre l'humidité (30) sur la première paroi latérale (2.1), la paroi extérieure (5) et la deuxième paroi latérale (2.2) du profilé creux polymère (1), dans laquelle la barrière contre l'humidité (30) comprend au moins
- un système multicouche ayant une fonction de barrière (33) comprenant au moins une couche polymère (35) et une couche barrière inorganique (34),
- une couche adhésive extérieure métallique ou céramique (31), dans laquelle la couche adhésive (31) a une épaisseur inférieure à 100 nm,
- une couche de liaison (32) disposée entre la couche adhésive (31) et le système multicouche (33) et contenant un polymère choisi dans le groupe comprenant le propylène orienté, le polyéthylène téréphtalate orienté, le propylène orienté biaxialement et le polyéthylène téréphtalate orienté biaxialement, dans lequel la couche de liaison (32) est directement adjacente à la couche adhésive (31).

2. Entretoise (I) selon la revendication 1, dans laquelle la couche adhésive (31) est une couche adhésive en céramique et comprend du SiOx ou est faite de SiOx.

3. Entretoise (I) selon la revendication 1, dans laquelle la couche adhésive (31) est une couche adhésive métallique et comprend ou est constituée d'aluminium, de titane, de nickel, de chrome, de fer, de leurs alliages et/ou de leurs oxydes.

4. Entretoise (I) selon la revendication 3, dans laquelle la couche adhésive (31) est constituée essentiellement d'un oxyde métallique, de préférence d'un oxyde de chrome ou d'un oxyde de titane.

5. Entretoise (I) selon l'une des revendications 1 à 4, dans laquelle la couche de liaison (32) a une épaisseur de 5 µm à 35 µm, de préférence une épaisseur de 8 µm à 30 µm, de préférence encore une épaisseur de 12 µm à 25 µm.

6. Entretoise (I) selon l'une des revendications 1 à 5, dans laquelle la couche adhésive extérieure (31) est appliquée directement sur la couche de liaison (32) par dépôt chimique en phase vapeur (CVD) ou par dépôt physique en phase vapeur (PVD).

7. Entretoise (I) selon l'une des revendications 1 à 6, dans laquelle la couche adhésive (31) a une épaisseur comprise entre 5 nm et 70 nm, de préférence entre 10 nm et 50 nm, de préférence encore entre 20 nm et 30 nm.

8. Entretoise (I) selon l'une des revendications 1 à 7, dans laquelle le système multicouche ayant une fonction de barrière (33) comprend au moins deux couches polymères (35) et au moins deux couches barrières inorganiques (34), de préférence comprend trois couches polymères (35) et trois couches barrières inorganiques (34).

9. Entretoise (I) selon l'une des revendications 1 à 8, dans laquelle le système multicouche ayant une fonction de barrière (33) contient exactement deux ou trois couches polymères (35) et trois couches barrières inorganiques (34).

10. Entretoise (I) selon l'une des revendications 1 à 9, dans laquelle le système multicouche ayant une fonction de barrière (33) comprend au moins une couche de liaison interne ayant une épaisseur de 1 µm à 8 µm, de préférence de 2 µm à 6 µm.

11. Entretoise (I) selon l'une des revendications 1 à 10, dans laquelle le système multicouche ayant une fonction de barrière (33) comprend, en tant que couches barrières inorganiques (34), exclusivement des couches barrières céramiques de SiOx et/ou de SiN.

12. Entretoise (I) selon l'une des revendications 1 à 10, dans laquelle le système multicouche ayant une fonction de barrière (33) comprend, en tant que couches barrières inorganiques (34), exclusivement des couches barrières métalliques (34), de préférence des couches d'aluminium.

13. Vitrage isolant (II), comprenant au moins une première vitre (13), une seconde vitre (14), une entretoise (I) selon l'une des revendications 1 à 12 disposé circonférentiellement entre la première vitre (13) et la seconde vitre (14), dans lequel
- la première vitre (13) est fixée à la première paroi latérale (2.1) par l'intermédiaire d'un mastic primaire (17),
- la seconde vitre (14) est fixée à la seconde paroi latérale (2.2) par l'intermédiaire d'un mastic primaire (17),
- un espace intercalaire intérieur (15) est délimité par la paroi intérieure du vitrage (3), la première vitre (13) et la seconde vitre (14),
- un espace intercalaire extérieur (16) est délimité par la barrière anti-humidité (30) fixée sur la paroi extérieure (5), la première vitre (13) et la seconde vitre (14),
- un mastic secondaire (18) est disposé dans l'espace intercalaire extérieur (16), le mastic secondaire (18) étant en contact avec la couche adhésive extérieure (31).

14. Utilisation du vitrage isolant (II) selon la revendication 13 comme vitrage intérieur d'un bâtiment, vitrage extérieur d'un bâtiment et/ou vitrage de façade.
